# EUROPEAN PATENT APPLICATION

(11) **EP 3 520 902 A1**
(43) Date of publication of application: **07.08.2019**
(21) Application number: 19154415.4
(22) Date of filing: 30.01.2019
(51) Int. Cl.: B05B 1/18, B05B 15/654, F21V 33/00, F03B 13/00

(54) **LED SPRINKLER**

(30) Priority: 06.02.2018 CN 201820202993 U
(71) Applicant: Shenzhen Rambo household products Co., Ltd., 518000 Shenzhen Guangdong (CN)
(72) Inventor: ZHU, Liandong, Shenzhen, Guangdong 518000 (CN)
(74) Representative: Hryszkiewicz, Danuta

(57) **Abstract**

An LED sprinkler, including: a universal transfer ball; a spherical fixing cover; a fixing ring; a hydroelectric generator; an LED indicator; a housing; and a sprinkler head. The housing is a hollow cylinder, and the hydroelectric generator and the LED indicator are disposed in the hollow cylinder. The LED indicator includes an LED and a circuit board, the hydroelectric generator includes an opening, and the circuit board corresponds to the opening of the hydroelectric generator. The LED indicator is disposed between the hydroelectric generator and the sprinkler head. The fixing ring is disposed on the housing. The universal transfer ball runs through the spherical fixing cover and is fixed on the housing.

## Description

This disclosure relates to a light-emitting diode (LED) sprinkler.

The faucet aerators of common sprinklers are fixed in one position. The spraying direction of the sprinkler cannot change, and the flow speed is relatively large, the water tends to splash, bringing inconvenience to users.

In addition, conventional LED sprinklers can only indicate hot water and cold water. Hot and cold are relative concepts, cannot accurately represent the true temperature.

To solve the above-mentioned problems, the disclosure provides an LED sprinkler.

An LED sprinkler, comprises: a universal transfer ball; a spherical fixing cover; a fixing ring; a hydroelectric generator; an LED indicator; a housing; and a sprinkler head.

The housing is a hollow cylinder, and the hydroelectric generator and the LED indicator are disposed in the hollow cylinder; the LED indicator comprises an LED and a circuit board, the hydroelectric generator comprises an opening, and the circuit board corresponds to the opening of the hydroelectric generator; the LED indicator is disposed between the hydroelectric generator and the sprinkler head; the fixing ring is disposed on the housing; the universal transfer ball runs through the spherical fixing cover and is fixed on the housing.

The LED indicator comprises a blue light which adapts to work when the water temperature is less than 32°C, a green light which adapts to work when the water temperature is between 33°C and 41°C, and a red light which adapts to work when the water temperature is between 42°C and 45°C; when the water temperature is higher than 46°C, the red light twinkles.

The universal transfer ball tends to rotate in 360° to drive the sprinkler head to rotate and spray water in 360°.

The sprinkler can generate power through the flowing water, so it is environmentally friendly. The water temperature can be known through observing the color of the LED indicator.

Features and advantages of the invention will be described in the following specification. The purpose and advantages of the invention can be realized and obtained through the structure specially pointed out in the written specification, claim and attached drawings.
FIG. 1 is an exploded view of an LED sprinkler as described in the disclosure; and
FIG. 2 is a stereogram of an LED sprinkler as described in the disclosure.

To further illustrate, embodiments detailing an LED sprinkler are described below. It should be noted that the following embodiments are intended to describe and not to limit the disclosure.

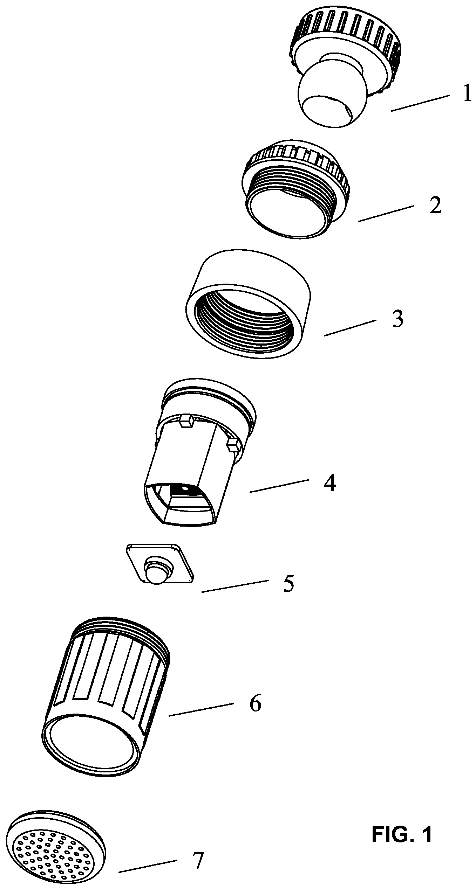

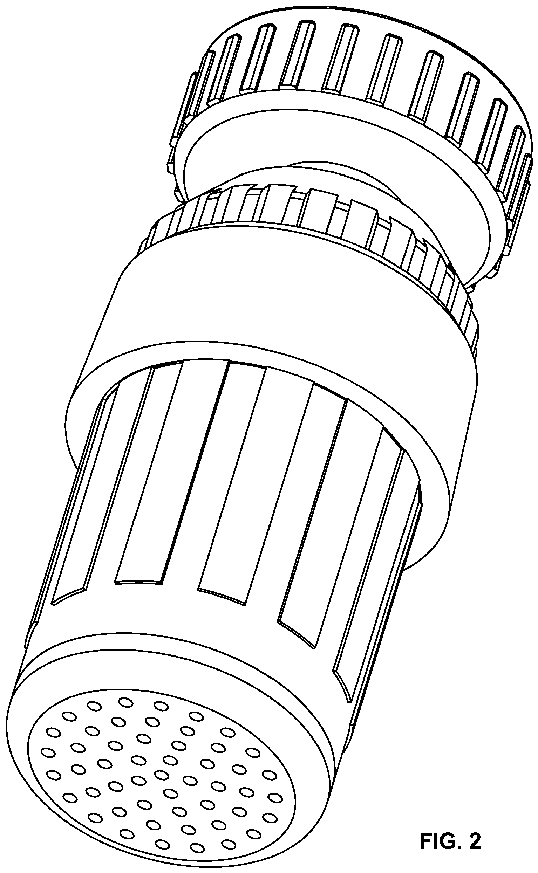

As shown in FIGS. 1-2, an LED sprinkler, comprises: a universal transfer ball 1; a spherical fixing cover 2; a fixing ring 3; a hydroelectric generator 4, an LED indicator 5; a housing 6; and a sprinkler head 7. The housing 6 is a hollow cylinder, and the hydroelectric generator 4 and the LED indicator 5 are disposed in the hollow cylinder; the LED indicator 5 comprises an LED and a circuit board, the hydroelectric generator comprises an opening, and the circuit board corresponds to the opening of the hydroelectric generator; the LED indicator is disposed between the hydroelectric generator 4 and the sprinkler head 7; the fixing ring 3 is disposed on the housing 6; the universal transfer ball 1 runs through the spherical fixing cover 2 and is fixed on the housing 6.

The LED indicator 5 comprises a blue light which adapts to work when the water temperature is less than 32°C, a green light which adapts to work when the water temperature is between 33°C and 41°C, and a red light which adapts to work when the water temperature is between 42°C and 45°C; when the water temperature is higher than 46°C, the red light twinkles.

Conventional sprinklers on the market cannot automatically adjust the direction of the sprinkler head. The direction can only be controlled by hand or other tools. As a result, it is very inconvenient to use. The sprinkler of the invention comprises a universal transfer ball, which can rotate in all directions, without the involvement of any tools, so the sprinkler of the invention is convenient to use.

The sprinkler can generate power through the flowing water, so it is environmentally friendly. The water temperature can be known through observing the color of the LED indicator.

The hydroelectric generator 4 can generate power through flowing water. This also achieves the effect of slowing down the speed of water flow, so that the water flowing out of the sprinkler head will not splash everywhere.

Upon mounting the sprinkler, the sprinkler head 7 sleeves one end of the housing 6, the LED indicator 5 is disposed on the hydroelectric generator 4, and then the LED indicator 5 and the hydroelectric generator 4 are mounted in the housing 6. Screw up the fixing ring 3 on the housing 6. The universal transfer ball 1 is inserted into the spherical fixing cover 2, and then screw up the spherical fixing cover 2 on the fixing ring 3.

It will be obvious to those skilled in the art that changes and modifications may be made, and therefore, the aim in the appended claims is to cover all such changes and modifications.

## Claims

1. An LED sprinkler, **characterized by** comprising:
a universal transfer ball (1);
a spherical fixing cover (2);
a fixing ring (3);
a hydroelectric generator (4);
an LED indicator (5);
a housing (6); and
a sprinkler head (7);
wherein:
the housing (6) is a hollow cylinder, and the hydroelectric generator (4) and the LED indicator (5) are disposed in the hollow cylinder;
the LED indicator (5) comprises an LED and a circuit board, the hydroelectric generator comprises an opening, and the circuit board corresponds to the opening of the hydroelectric generator;
the LED indicator is disposed between the hydroelectric generator (4) and the sprinkler head (7);
the fixing ring (3) is disposed on the housing (6);
the universal transfer ball (1) runs through the spherical fixing cover (2) and is fixed on the housing (6).

2. The LED sprinkler of claim 1, **characterized in that** the LED indicator (5) comprises a blue light which adapts to work when a water temperature is less than 32°C, a green light which adapts to work when the water temperature is between 33°C and 41°C, and a red light which adapts to work when the water temperature is between 42°C and 45°C; when the water temperature is higher than 46°C, the red light twinkles.

3. The LED sprinkler of claim 1 or 2, **characterized in that** the universal transfer ball (1) tends to rotate in 360°.
